(19) Europäisches Patentamt
European Patent Office
Office européen des brevets

(11) **EP 3 379 294 A1**

(12) **EUROPÄISCHE PATENTANMELDUNG**

(43) Veröffentlichungstag:
26.09.2018 Patentblatt 2018/39

(51) Int Cl.:
*G01S 17/93* (2006.01)     *G01S 7/481* (2006.01)

(21) Anmeldenummer: 18162548.4

(22) Anmeldetag: **19.03.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **20.03.2017 DE 102017204550**

(71) Anmelder: **Robert Bosch GmbH**
**70442 Stuttgart (DE)**

(72) Erfinder:
• **Schwarz, Hans-Jochen**
**70567 Stuttgart (DE)**
• **Stoppel, Klaus**
**74395 Mundelsheim (DE)**

(54) **SENDEROPTIK FÜR EIN LIDAR-SYSTEM, LIDAR-SYSTEM UND ARBEITSVORRICHTUNG**

(57)     Die vorliegende Erfindung betrifft eine Senderoptik (60) für ein LiDAR-System (1) zur optischen Erfassung eines Sichtfeldes (50), insbesondere für eine Arbeitsvorrichtung oder ein Fahrzeug, mit (i) einem Lichtquellenbereich (65'), welcher zum Bereitstellen eines Lichtstrahls (57-1) von Primärlicht (57) ausgebildet ist, und mit (ii) einem Strahlteiler (68), welcher mit einer Prismenanordnung (69) einer Mehrzahl optisch gekoppelter Prismen (70, 80) zur Aufnahme des Lichtstrahls (57-1) des Primärlichts (57), zu dessen Aufteilung in eine entsprechende Mehrzahl von Lichtstrahlen (57-3) des Primärlichts (57) und zu deren paralleler Aussendung in das Sichtfeld (50) ausgebildet ist.

## Fig. 1A

**Beschreibung**

Stand der Technik

Die vorliegende Erfindung betrifft eine Senderoptik für ein LiDAR-System, ein LiDAR-System zur optischen Erfassung eines Sichtfeldes und eine Arbeitsvorrichtung. Die vorliegende Erfindung betrifft insbesondere ein LiDAR-System für eine Arbeitsvorrichtung oder ein Fahrzeug sowie ein Fahrzeug als solches.

Beim Einsatz von Arbeitsvorrichtungen, von Fahrzeugen und anderen Maschinen und Anlagen werden vermehrt Betriebsassistenzsysteme oder Sensoranordnungen zur Erfassung der Betriebsumgebung eingesetzt. Neben radarbasierten Systemen oder Systemen auf der Grundlage von Ultraschall, kommen auch lichtbasierte Erfassungssysteme zum Einsatz, z.B. so genannte LiDAR-Systeme (englisch: LiDAR : light detection and ranging).

Bei bekannten LiDAR-Systemen besteht ein Nachteil dahingehend, dass die Qualität der optischen Erfassung einerseits stark mit der verwendeten Strahlungsintensität korreliert, andererseits eine Intensitätssteigerung auf Grund der Notwendigkeit der Augensicherheit nicht ohne weiteres möglich ist. Ferner können verschmutzungsbedingte Performanceeinbußen nur schwer kompensiert werden.

Offenbarung der Erfindung

Die erfindungsgemäße Senderoptik mit den Merkmalen des unabhängigen Anspruches 1 weist demgegenüber den Vorteil auf, dass bei gleichbleibender Augensicherheit die Qualität der Umgebungserfassung gesteigert und der Einfluss von Verschmutzungen reduziert werden können. Dies wird erfindungsgemäß mit den Merkmalen des unabhängigen Anspruches 1 dadurch erreicht, dass eine Senderoptik für ein LiDAR-System zur optischen Erfassung eines Sichtfeldes und insbesondere für eine Arbeitsvorrichtung oder ein Fahrzeug geschaffen wird, welche (i) einen Lichtquellenbereich, der zum Bereitstellen eines Lichtstrahls von Primärlicht ausgebildet ist, und (ii) einen Strahlteiler aufweist, der mit einer Prismenanordnung einer Mehrzahl optisch gekoppelter Prismen zur Aufnahme des Lichtstrahls des Primärlichts, zu dessen Aufteilung in eine entsprechende Mehrzahl von Lichtstrahlen des Primärlichts und zu deren paralleler Aussendung in das Sichtfeld ausgebildet ist. Durch diese Maßnahmen wird erreicht, dass die Gesamtlaserleistung ohne Risiko für die Augen gesteigert werden kann, um so die Reichweite und die Detektionsgenauigkeit zu verbessern. Durch die Ausrichtung der einzelnen Strahlen des Primärlichts nach Aussendung in paralleler Weise zueinander lässt sich auf zuverlässige Art und Weise die Abdeckung des gesamten Sichtfeldes realisieren.

Die Unteransprüche zeigen bevorzugte Weiterbildungen der Erfindung.

Bei einer vorteilhaften Weiterbildung der erfindungsgemäßen Senderoptik weist der Strahlteiler ein oder mehrere optisch gekoppelte Rhomboidprismen auf. Diese Form ermöglicht mit einfachen geometrischen Mitteln eine geeignete Aufspaltung des Primärlichtstrahls und die entsprechende Einstellung der Intensitätsverhältnisse durch geeignete Wahl der Grenzflächenbedingungen. Die Rhomboidprismen können insbesondere identisch ausgebildet sein.

Es sind unterschiedliche geometrische Ausgestaltungsformen für die jeweiligen Rhomboidprismen denkbar.

Es ist jedoch von besonderem Vorteil, wenn ein jeweiliges Rhomboidprisma mit rechteckigen Seitenflächen als Lichteintrittsflächen, reflektierenden Strahlteilungsflächen und/oder Lichtaustrittsflächen und/oder mit parallelogrammförmigen Grundflächen, insbesondere mit einem ersten Parallelogrammwinkel von 45°, ausgebildet ist.

Bei einer bevorzugten Weiterbildung der erfindungsgemäßen Senderoptik weist neben mindestens einem Rhomboidprisma der Strahlteiler in Bezug auf die Richtung des Strahlengangs des Primärlichts auf einer Hauptlichteingangsseite des einen oder der mehreren Rhomboidprismen und/oder endständig zu diesen optisch gekoppelt ein Keilprisma auf.

Auch das Keilprisma kann unterschiedlich ausgestaltet sein.

Von besonderem Vorteil ist jedoch ein Keilprisma mit rechteckigen Seitenflächen als Lichteintrittsflächen, reflektierenden Strahlteilungsflächen und/oder Lichtaustrittsflächen und/oder mit dreieckigen Grundflächen, insbesondere auf der Grundlage eines rechtwinkligen, gleichseitigen und/oder gleichschenkligen Dreiecks.

Grundsätzlich bieten sich verschiedene Anordnungsmöglichkeiten der einzelnen Prismen der Prismenanordnung in Bezug aufeinander an.

Besonders geeignet ist eine Anordnung, bei welcher eine Lichteintrittsfläche des Keilprismas zur optischen Kopplung verbunden ist mit einer in Bezug auf die Richtung des Strahlengangs des Primärlichts ersten Lichtaustritts- und/oder Strahlteilungsfläche des in Richtung des Strahlengangs des Primärlichts unmittelbar vorangehenden und ersten Rhomboidprismas.

Zusätzlich oder alternativ kann es vorgesehen sein, dass beim Vorhandensein mehrerer Rhomboidprismen eine Lichteintrittsfläche eines in Bezug auf die Richtung des Strahlengangs des Primärlichts unmittelbar nachfolgenden Rhomboidprismas zur optischen Kopplung verbunden ist mit einer in Bezug auf die Richtung des Strahlengangs des Primärlichts zweiten Lichtaustritts- und/oder Strahlteilungsfläche eines in Bezug auf die Richtung des Strahlengangs des Primärlichts unmittelbar vorangehenden Rhomboidprismas.

Die Intensität der einzelnen aufgespaltenen Primärlichtstrahlen kann auf unterschiedliche Weise eingestellt werden.

Besonders einfache Verhältnisse ergeben sich, wenn der Strahlteiler eingerichtet ist, die Austrittsstrahlen des Primärlichts beim Durchlaufen der Prismenanordnung mit dem Austritt mit einer gleichen oder im Wesentlichen gleichen Lichtintensität auszubilden.

Dies kann durch unterschiedliche Maßnahmen erreicht werden, lässt sich jedoch mit besonders einfachen Mitteln realisieren, indem beim Vorliegen einer Anzahl n von Rhomboidprismen das in Richtung des Strahlengangs des Primärlichts j-te Rhomboidprisma an seiner in Bezug auf die Richtung des Strahlengangs des Primärlichts zweiten Lichtaustritts- und/oder Strahlteilungsfläche ein Reflexionsvermögen $R_j$ und ein Transmissionsvermögen $T_j$ aufweist mit:

$$R_j = \frac{1}{n-j+1} \qquad \text{und} \qquad T_j = \frac{n-j}{n-j+1} \; . \qquad (1, 2)$$

Zusätzlich oder alternativ ist es denkbar, dass beim Vorliegen eines Keilprismas die in Bezug auf die Richtung des Strahlengangs des Primärlichts erste Lichtaustritts- und/oder Strahlteilungsfläche des in Richtung des Strahlengangs des Primärlichts ersten Rhomboidprismas ein Reflexionsvermögen $R_0$ und ein Transmissionsvermögen $T_0$ aufweist mit:

$$R_0 = \frac{n}{n+1} \qquad \text{und} \qquad T_0' = \frac{1}{n+1} \; . \qquad (3, 4)$$

Ferner betrifft die vorliegende Erfindung ein LiDAR-System zur optischen Erfassung eines Sichtfeldes, insbesondere für eine Arbeitsvorrichtung oder ein Fahrzeug, mit einer Senderoptik gemäß der vorliegenden Erfindung.

Gemäß einem weiteren Aspekt der vorliegenden Erfindung wird auch eine Arbeitsvorrichtung insbesondere ein Fahrzeug geschaffen. Dieses ist mit einem gemäß der Erfindung ausgestalteten LiDAR-System zur optischen Erfassung eines Sichtfeldes ausgebildet.

Kurzbeschreibung der Figuren

Unter Bezugnahme auf die beigefügten Figuren werden Ausführungsformen der Erfindung im Detail beschrieben.

Figur 1A      zeigt in Form eines schematischen Blockdiagramms eine Ausführungsform des erfindungsgemäßen LiDAR-Systems.

Figuren 1B und 1C      zeigen in schematischer und geschnittener Seitenansicht ein erfindungsgemäß verwendbares Rhomboidprisma bzw. ein Keilprisma.

Figuren 2 bis 10      zeigen in schematischer Seitenansicht bzw. in perspektivischer Draufsicht verschiedene Ausgestaltungsformen des erfindungsgemäß vorgesehenen Strahlteilers.

Bevorzugte Ausführungsformen der Erfindung

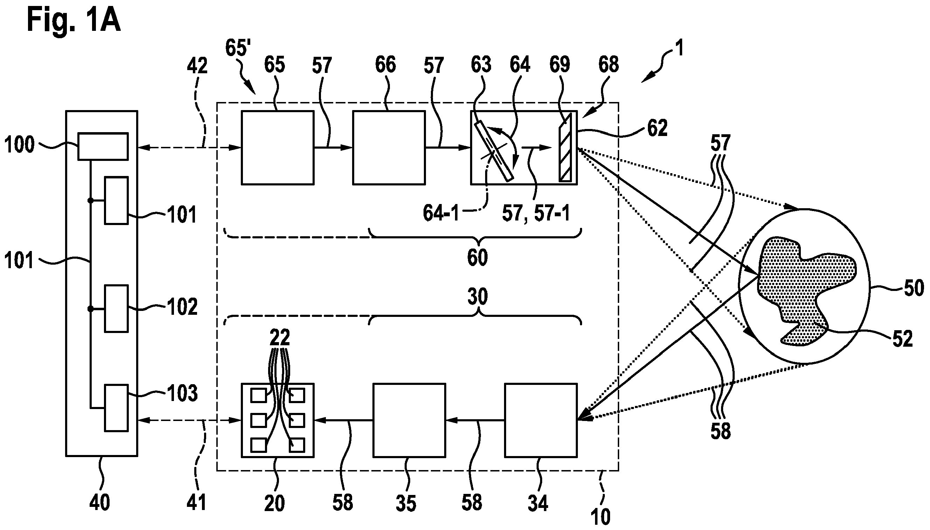

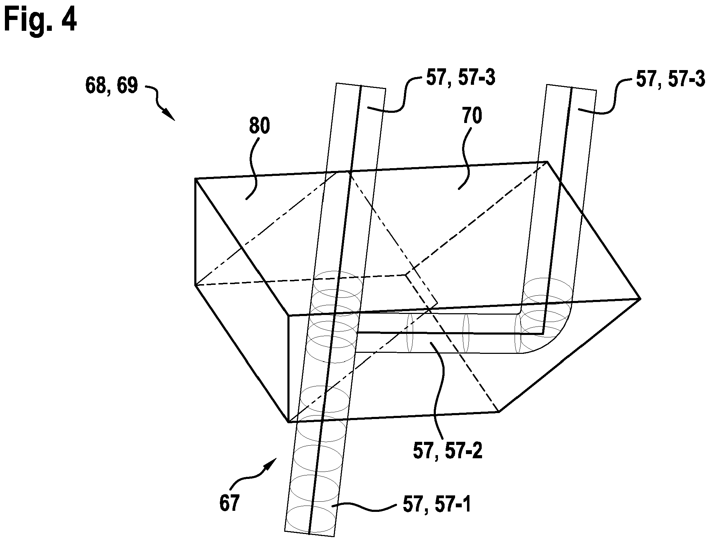

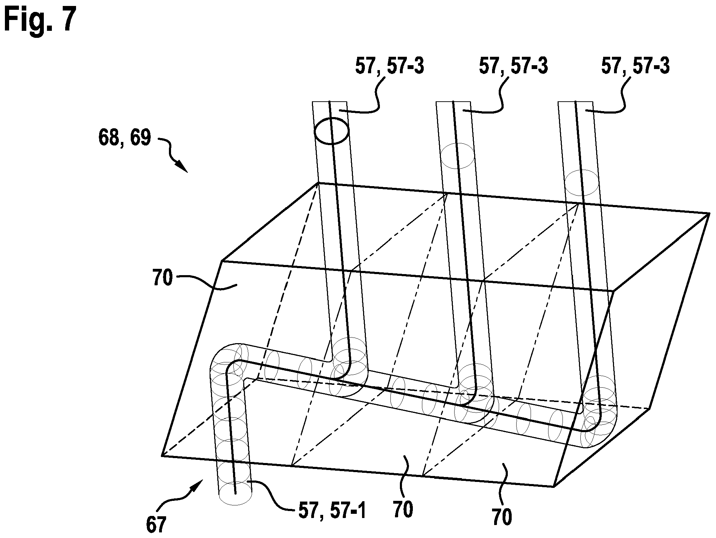

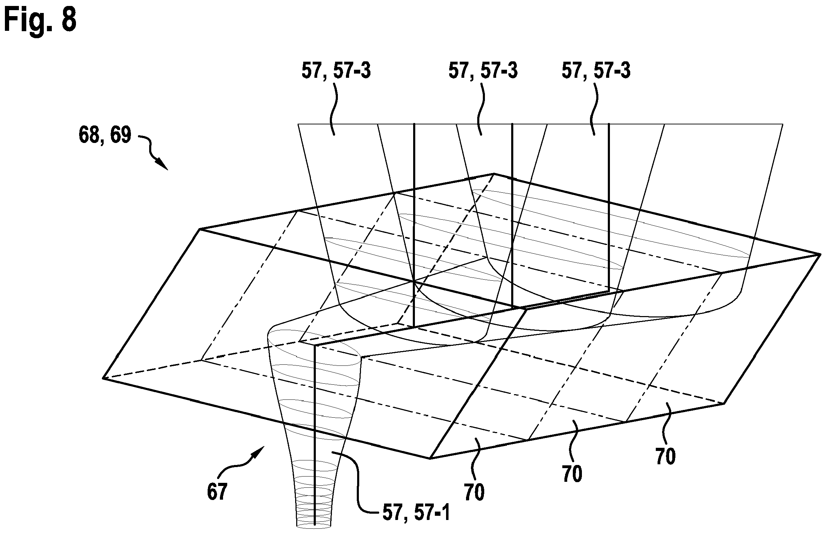

Nachfolgend werden unter Bezugnahme auf die Figuren 1A bis 10 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1A zeigt nach Art eines Blockdiagramms in schematischer Weise eine Ausführungsform des erfindungsgemäßen LiDAR-Systems 1.

Das in Figur 1A dargestellte LiDAR-System 1 besteht neben einer Steuer- und Auswerteeinheit 40 aus der dem Betrieb des LiDAR-Systems 1 zu Grunde liegenden optischen Anordnung 10 mit einer Lichtquelle 65 als Lichtquellenbereich 65', zum Beispiel in Form eines oder mehrerer Laser, einer Senderoptik 60, einer Empfängeroptik 30 und einer Detektoranordnung 20. Die Steuerung des Betriebs des LiDAR-Systems 1 sowie die Auswertung der durch das LiDAR-System 1 empfangenen Signale erfolgt durch die Steuer- und Auswerteeinheit 40.

Im Betrieb wird durch Steuerung und Veranlassung mittels der Steuer- und Auswerteeinheit 40 über eine Steuerleitung 42 die Lichtquelle 65 zur Erzeugung und Ausgabe primären Lichts 57 veranlasst, welches auch als Primärlicht bezeichnet wird. Das Primärlicht 57 wird mittels einer Strahlformungsoptik 66 entsprechend dem Anwendungsfall modelliert und dann mittels einer sendeseitig abtastenden Ablenkoptik 62, zum Beispiel in Form eines oder mehrerer ein- oder zweidimensional abtastender Mikrospiegel 63 - zum Beispiel vom MEMS-Typ - mit Schwenkachse 64-1 zum Verschwenken mit einer Schwenkbewegung 64, in ein Sichtfeld 50 mit einem darin enthaltenen Objekt 52 ausgesandt.

Das aus dem Sichtfeld 50 und vom Objekt 52 reflektierte Licht wird auch als sekundäres oder Sekundärlicht 58 bezeichnet und in der Empfängeroptik 30 mittels eines Objektivs 34 aufgenommen, gegebenenfalls von einer vorgesehenen Sekundäroptik 35 weiterbehandelt und dann an eine Detektoranordnung 20 mit einem oder mit mehreren Sensorelementen 22 übertragen. Die Sensorelemente 22 der Detektoranordnung 20 erzeugen ihrerseits das Sekundärlicht 58 repräsentierende Signale, die mittels einer Steuer- und Messleitung 41 an die Steuer- und Auswerteeinheit 40 übertragen werden.

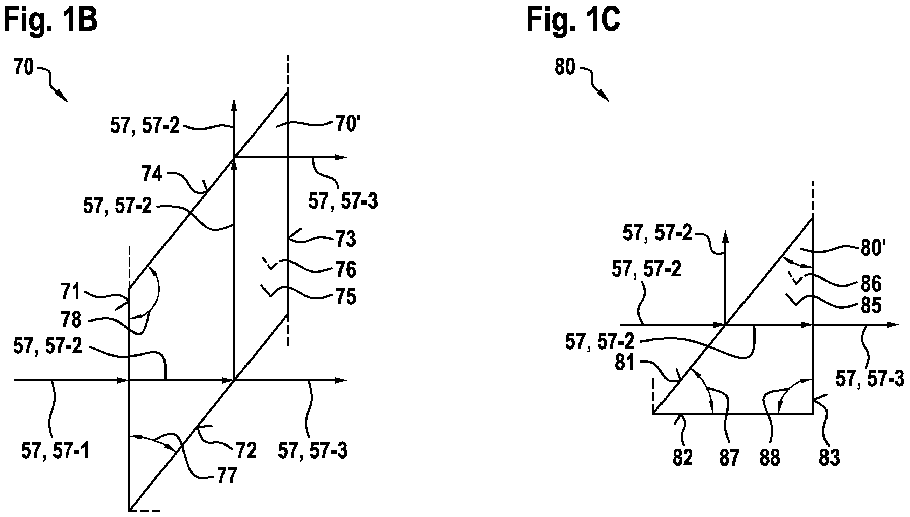

Die Ausführungsform der Steuer- und Auswerteeinheit 40 gemäß Figur 1 besteht aus einem übergeordneten Steuersystem 100, welches mittels eines Busses 101 mit einer Sendeeinheit 102, einer Empfangseinheit 103 und einer Korrelationseinheit 104 verbunden ist.

Es können das Steuersystem 100 und die Einheiten 102, 103 und 104 tatsächlich als separate Komponenten innerhalb der Steuer- und Auswerteeinheit 40 ausgebildet sein.

Es kann jedoch ein LiDAR-System 1 ausgebildet sein, bei welchem ein oder mehrere der Komponenten der Steuer- und Auswerteeinheit 40 miteinander kombiniert und integriert ausgebildet sind, so dass die Darstellung gemäß Figur 1A nur der Darstellung der vorhandenen Komponenten dem Grundsatz nach dient, die konkrete Architektur dadurch jedoch nicht unbedingt widergespiegelt wird und von der Darstellung aus Figur 1 abweichen kann.

Bei der Ausführungsform gemäß Figur 1A ist der Spiegel 63 über eine Verschwenkbewegung, die mit dem Doppelpfeil 64 angedeutet ist, eindimensional oder zweidimensional um eine Schwenkachse 64-1 verschwenkbar, um das Primärlicht 57 vermittelt durch den Strahlteiler 68 und dessen Prismenanordnung 69 auf das Sichtfeld 50 mit einem gegebenenfalls darin enthaltenen Objekt 52 zu richten.

Durch die Wechselwirkung des einlaufenden Lichtstrahls 57-1 des Primärlichts 57 mit dem Strahlteiler 68 entsteht eine Mehrzahl paralleler auslaufender Lichtstrahlen 57-3 des Primärlichts 57.

Die Figuren 1B und 1C zeigen in schematischer und geschnittener Seitenansicht ein erfindungsgemäß verwendbares Rhomboidprisma 70 bzw. ein Keilprisma 80.

Die Grundflächenform des Rhomboidprismas 70 gemäß Figur 1B und seines Grundkörpers 70' ist die eines Rhombus' oder Parallelogramms für die Grundflächen 75 und 76, wogegen die Seitenflächen 71 bis 74 eine Rechteckform besitzen.

Dargestellt ist in Figur 1B der erste Parallelogrammwinkel 77, hier mit einem Wert von 45°, sowie der zweite Parallelogrammwinkel 78, hier mit einem Wert von 135°.

Der einlaufenden Lichtstrahl 57-1 des Primärlichts 57 tritt über die erste Seitenfläche 71 als Lichteintrittsfläche in das Rhomboidprisma 70 ein und wird an der ersten Lichtaustritts- und/oder Strahlteilungsfläche 72 aufgespalten in einen Lichtstrahl 57-2, welcher um 45° abgelenkt im Grundkörpers 70' des Rhomboidprismas 70 verbleibt, und in einen weiteren Lichtstrahl 57-3, welcher das Rhomboidprisma 70 verlässt.

Der abgelehnte Lichtstrahl 57-2 wird dann an der zweiten Lichtaustritts- und Strahlteilungsfläche 74 erneut aufgespalten in einen das Rhomboidprisma 70 durch Reflexion abgelenkt verlassenden Strahl 57-3 und einen in Transmission das Rhomboidprisma 70 verlassenden Strahl 57-2.

Das Reflexionsvermögen R und das Transmissionsvermögen T der Flächen 72 und 74 können so eingestellt werden, dass die Intensitäten der das Rhomboidprisma 70 verlassenden Strahlen 57-3 in einem bestimmten Intensitätsverhältnis zueinanderstehen und insbesondere dieselbe Intensität besitzen.

Figur 1C zeigt ein Keilprisma 80 mit einem gleichseitigen Dreieck als Form für die Grundflächen 85 und 86 und mit rechteckigen Seitenflächen 81, 82 und 83.

Der Dreieckswinkel 88 ist ein rechter Winkel von 90°, der Dreieckswinkel 87 ist ein Winkel von 45°.

In der in Figur 1C dargestellten Anordnung fungiert die Fläche 81 als Lichteintrittsfläche und die Fläche 83 als Lichtaustrittsfläche.

Zum Beispiel kann die Lichteintrittsfläche 81 des Keilprismas 80 mit dem Grundkörper 80' angefügt sein an der ersten Lichtaustrittsfläche 72 des Rhomboidprismas 70 aus Figur 1B, sodass dadurch eine Prismenanordnung 69 für einen Strahlteiler 68 mit einem Rhomboidprisma 70 und einem angefügten Keilprisma 80 entsteht.

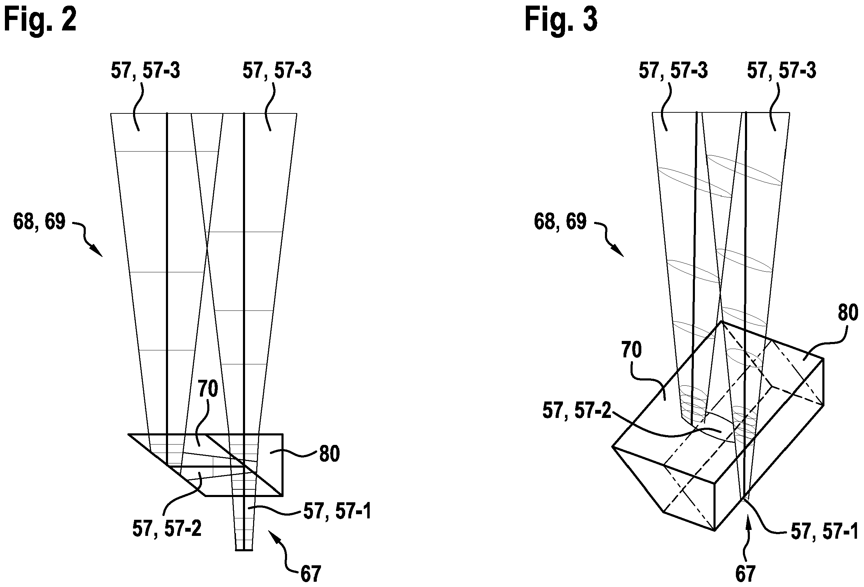

Eine derartige Situation ist in den Figuren 2 bis 4 dargestellt, und zwar jeweils mit einem einlaufenden Strahl 57-1 des Primärlichts 57 und zwei auslaufenden Strahlen 57-2 des Primärlichts 57, welche dann in das dort nicht dargestellte Sichtfeld 50 ausgesandt werden. Es erfolgt gemäß den Figuren 2 bis 4 eine Aufspaltung in zwei Sendestrahlen.

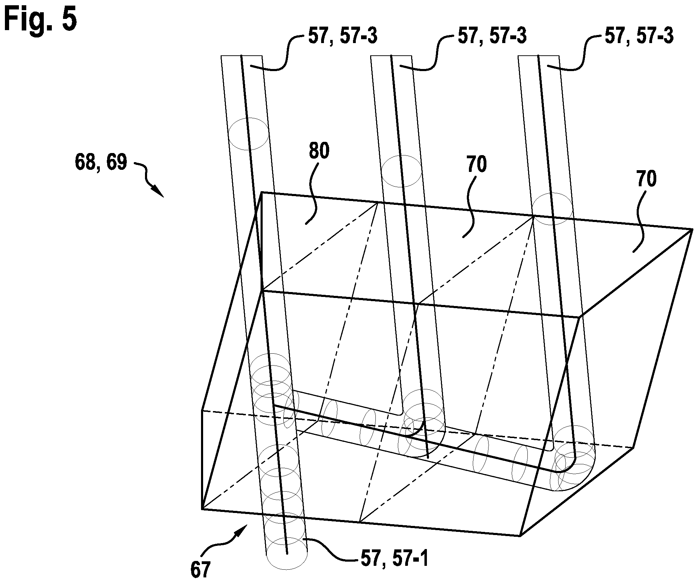

Figur 5 zeigt eine erfindungsgemäß verwendbare Prismenanordnung 69 für einen Strahlteiler 68 mit einer Anordnung aus zwei identischen Rhomboidprismen 70 und einem eingangsseitig vorgesehenen Keilprisma 80. Es erfolgt also eine Aufteilung des einlaufenden Strahls 57-1 des Primärlichts 57 in drei auslaufende Strahlen 57-3 als Sendestrahlen zum Überstreichen des Sichtfeldes 50.

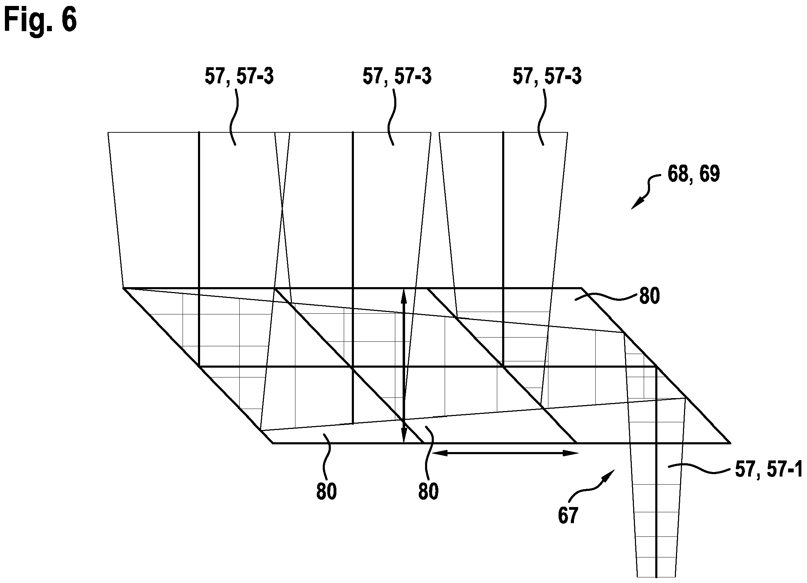

Die Figuren 6 bis 8 zeigen Strahlteiler 68 mit Prismenanordnungen 69, die jeweils von drei identischen Rhomboidprismen 70 ohne Keilprisma 80 gebildet werden. Es erfolgt hier also eine Aufteilung des einlaufenden Lichtstrahls 57-1 des Primärlichts 57 in 3 Sendestrahlen 57-3 des Primärlichts 57.

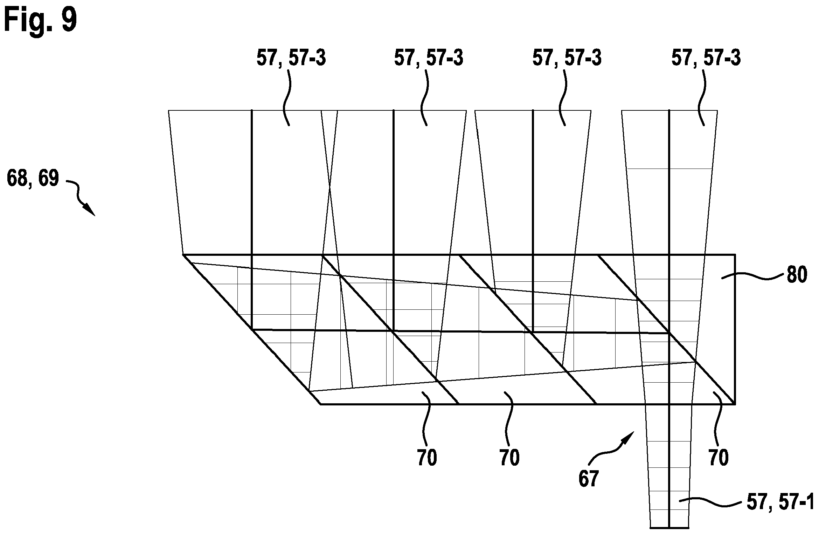

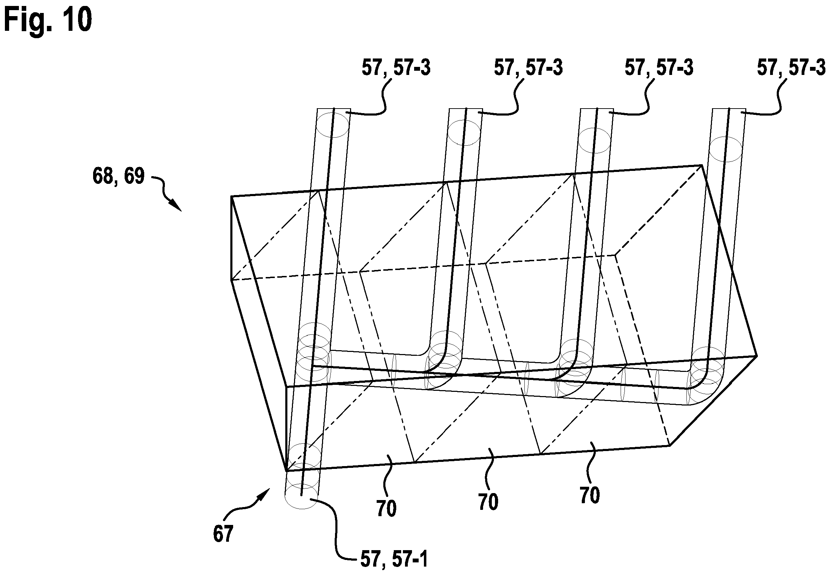

Die Prismenanordnungen 69 der Strahlteiler 68 gemäß den Figuren 9 und 10 entsprechen in etwa den Anordnungen gemäß den Figuren 6 bis 8, wobei jedoch auf der Hauptlichteingangsseite 67 und endständig in Bezug auf die Anordnung der Rhomboidprismen 70 ein ergänzendes Keilprisma 80 ausgebildet ist, so dass trotz des Vorsehens von drei Rhomboidprismen 70 eine Aufspaltung des einlaufenden Strahls 57-1 des Primärlichts 57 in vier ausgehende Strahlen 57-3 des Primärlichts 57 erfolgt, welche in das Sichtfeld 50 ausgesandt werden.

Diese und weitere Merkmale und Eigenschaften der vorliegenden Erfindung werden an Hand der folgenden Darlegungen weiter erläutert:

Bauformen von MEMS-LIDAR-Systemen (MEMS : micro electro mechanical systems) sind Konzepte mit einem einzigen Sendestrahl des Primärlichts 57, der mittels eines MEMS-Spiegels 63 der Senderoptik 60 abgelenkt wird. Dieser Vorgang wird als Scannen oder Abtasten bezeichnet.

Der MEMS-Spiegeldurchmesser ist hierbei die begrenzende Apertur und bestimmt den Sendestrahldurchmesser des Lasers. Ein 2D-MEMS-Spiegeldurchmesser könnte heute fertigungsbedingt maximal 3x3 mm$^2$ groß sein. Der Sendelaserdurchmesser am Spiegel ist dann etwa 2 mm bis 2,5 mm, damit dieser durch einen MEMS-Spiegel z.B. +-25° abgelenkt werden kann.

Die mögliche Bauform hat in Bezug auf den Sendestrahl nur eine geringe Laserenergie (z.B. von ca. 35 W bei 4ns), damit ein sicherer Betrieb nach Lasersicherheitsnorm (IEC 60825-1) der Laserklasse 1 zum Beispiel in einem PKW ermöglich wird.

Die Laserleistung ist limitiert, da der Sendelaserstrahldurchmesser (z.B. mit einer Strahltaille mit einem Durchmesser von ca. 2,5 mm und einer Divergenz von etwa 0,15°) im Nahbereich (0 m bis 5 m) komplett in die Pupille des Auges einstrahlen kann. Grund hierfür ist der Pupillendurchmesser (z.B. von ca. 7 mm) eines Menschen, der um ca. Faktor zwei größer ist als der Laserstrahl. Kommerzielle LiDAR-Systeme, z.B. Makroscanner Systeme, senden mit einem Faktor von etwa 10 höherer Energien mit ihren Sendelasern aus. Grund hierfür ist der große Sendestahldurchmesser von ca. 15 mm bis 25 mm am Austritt der Senderlinse des Makro-LiDAR-Systems.

MEMS-LiDAR-Systemen sind durch ihren einzelnen Sendestrahl leistungsbegrenzt, beispielsweise auf 35 W bei 4 ns, und dadurch auch in der Reichweite begrenzt, z.B. auf unter 50 m.

Eine Zielvorstellung der vorliegenden Erfindung ist die Erhöhung der Sendeleistung durch eine Anzahl n paralleler Sendestrahlen.

Das erfindungsgemäße LiDAR-System 1 ist unempfindlicher gegen partielle Verschmutzungen am Sendestrahlaustritt, da mehrere Strahlen 57-3 des Primärlichts 57 parallel versetzt das LiDAR-System 1 zum Sichtfeld 50 verlassen.

Durch kleinere partielle Verschmutzung am Austritt können die restlichen parallelen Strahlen 57-3 ungehindert an der Verschmutzung vorbei gesendet werden.

Eine weitere Zielvorstellung der vorliegenden Erfindung ist die Erhöhung der Reichweite durch die Verwendung mehrerer Laserstrahlen mit jeweils weniger als etwa 35 W pro Strahl und mit einer Sendeleistung in Summe z.B. 3 x 35 W = 105 W bei 4 ns und bei einem Vierfachstrahlteiler 68 mit 4 x 35 W bei 4 ns.

Dabei kann der Strahlteiler 68 auch im oder als Austrittsfenster des erfindungsgemäßen LiDAR-Systems 1 genutzt werden.

Die Erhöhung der Laserleistung um einen Faktor n der duplizierten Strahlen 57-3 am Austritt bei Einhaltung der Laserklasse 1 ist also ein besonderer Vorteil der vorliegenden Erfindung.

Ferner ist die Aufteilung der Laserleistung in n gleiche Sendestrahlen 57-3 mit jeweils der durch n geteilten Gesamtleistung von Vorteil.

Weitere wesentliche Vorteile der Erfindung sind:

- Erhöhung der Sendeleistung durch Aufspaltung des primären Laserstrahls in parallele Laserstrahlen.

- Keine nennenswerte Verschlechterung der Bildauflösung durch die exakten parallelisierten Sendestrahlen.

- Der Strahlteiler kann monolithisch aufgebaut sein, z.B. aus verkitteten Rhomboidprismen 70, und ermöglicht eine einfache Montage und Integration in den Sendepfad eines MEMS-LiDAR-Systems 1.

- Die geringe Dejustage bei der Montage wirkt sich nicht auf die Parallelität der Sendestrahlen 57-3 des Primärlichts 57 aus.

Die Justageanforderungen des Strahlteilers im LiDAR-Gerät sind gering, da die Parallelität der Strahlen durch die präzise gefertigten parallelen Flächen der Rhomboid-Prismen erreicht wird. Die Parallelitätsanforderung des monolithischen Strahlteilers liegt bei ca. 0,03°. Dieser Wert ergibt sich aus einer Rückrechnung durch Ausleuchtung mit einem Durchmesser von 0,5 m bei etwa 180 m auf einen Strahlversatz von etwa 0,1 m.

Eine Parallelität von weniger als 0,01° ist heute Stand der Technik und kann mit bekannten Fertigungsmaschinen hergestellt werden.

Eine aktuelle Zielanforderung für das Sichtfeld 50 eines erfindungsgemäßen MEMS-LiDAR-Systems 1 ist $\pm$ 25° in horizontaler Richtung und $\pm$5° in vertikaler Richtung.

Beschreibung und Aufbau:

Aufgebaut wird die Strahlteilereinheit 68 durch eine Anzahl n von Rhomboidprismen 70 und optional durch ein keilförmiges Prisma 80.

Die Prismen 70, 80 können aus Glas oder optischen Kunststoffen hergestellt werden.

Die Kontaktflächen - insbesondere also die Flächen 72 und 74 beim Rhomboidprisma 70 bzw. 81 beim Keilprisma 80 - können mit einer teilreflektierenden Beschichtung versehen und mit einem optischen Kleber verbunden werden. Die Eintrittsflächen 71 bzw. 81 und Austrittsflächen 72, 73, 74 bzw. 83 für Primärlichts 57 werden mit einer AR-Beschichtung versehen.

Die Sendestrahlen 57-3 des Primärlichts 57 sind parallel angeordnet und besitzen die gleiche Strahldivergenz, z.B. von 0,15°. Eine Verschlechterung der Auflösung erfolgt durch die parallelen Strahlen im Fernbereich nicht.

Der Abstand der Laserstrahlen sollte größer als 7 mm sein. Er wird durch die Breite der Prismen 70, 80 hervorgebracht. Zum Beispiel kann in den Varianten eine Breite von 8 mm ausgebildet werden, dies ist jedoch nicht zwingend.

Die Strahlteilung kann polarisierend oder nicht polarisierend erfolgen.

Die Aufteilung in polarisierende Laserstrahlen kann durch einen λ/4-Spalt oder durch speziell angepasste Beschichtungen zwischen den Prismen 70, 80 erfolgen.

Dielektrische Mehrfachschichten zwischen den Prismen 70, 80 bieten die Möglichkeit das Teilungsverhältnis beliebig einzustellen, ohne dass Absorptionsverluste auftreten und ohne nennenswerte Änderung der Polarisation.

Die Strahlteilung kann z.B. für drei Strahlen mit folgenden Aufteilungsverhältnissen in gleiche Leistungen geteilt sein:

1. Strahlteilung: 66 % bei 90°
2. Strahlteilung: 50 %
3. Endfläche 100 %, diese Fläche kann zu 100% verspiegelt sein oder die Totalreflexion zur Luft nutzen.

**Patentansprüche**

1. Senderoptik (60) für ein LiDAR-System (1) zur optischen Erfassung eines Sichtfeldes (50), insbesondere für eine Arbeitsvorrichtung oder ein Fahrzeug, mit:

    - einem Lichtquellenbereich (65'), welcher zum Bereitstellen eines Lichtstrahls (57-1) von Primärlicht (57) ausgebildet ist, und
    - einem Strahlteiler (68), welcher mit einer Prismenanordnung (69) einer Mehrzahl optisch gekoppelter Prismen (70, 80) zur Aufnahme des Lichtstrahls (57-1) des Primärlichts (57), zu dessen Aufteilung in eine entsprechende Mehrzahl von Lichtstrahlen (57-3) des Primärlichts (57) und zu deren paralleler Aussendung in das Sichtfeld (50) ausgebildet ist.

2. Senderoptik (60) nach Anspruch 1,
    bei welcher der Strahlteiler (68) ein oder mehrere - insbesondere identische

    - optisch gekoppelte Rhomboidprismen (70) aufweist.

3. Senderoptik (60) nach Anspruch 2,
    bei welcher ein jeweiliges Rhomboidprisma (70) mit rechteckigen Seitenflächen (71, 72, 73, 74) als Lichteintritts-, reflektierenden Strahlteilungs- und/oder Lichtaustrittsflächen und/oder mit parallelogrammförmigen Grundflächen (75, 76), insbesondere mit einem ersten Parallelogrammwinkel (77) von 45°, ausgebildet ist.

4. Senderoptik (60) nach einem der vorangehenden Ansprüche,
    bei welcher der Strahlteiler (68) in Bezug auf die Richtung des Strahlengangs des Primärlichts (57) auf einer Hauptlichteingangsseite (67) des einen oder der mehreren Rhomboidprismen (70) und/oder endständig zu diesen optisch gekoppelt ein Keilprisma (80) aufweist.

5. Senderoptik (60) nach Anspruch 4,
bei welcher das Keilprisma (80) mit rechteckigen Seitenflächen (81, 82, 83) als Lichteintritts-, reflektierenden Strahlteilungs- und/oder Lichtaustrittsflächen und/oder mit dreieckigen Grundflächen (85, 86) ausgebildet ist, insbesondere auf der Grundlage eines rechtwinkligen, gleichseitigen und/oder gleichschenkligen Dreiecks.

6. Senderoptik (60) nach Anspruch 4 oder 5,
bei welcher eine Lichteintrittsfläche (81) des Keilprismas (80) zur optischen Kopplung verbunden ist mit einer in Bezug auf die Richtung des Strahlengangs des Primärlichts (57) ersten Lichtaustritts- und/oder Strahlteilungsfläche (74) des in Richtung des Strahlengangs des Primärlichts (57) unmittelbar vorangehenden und ersten Rhomboidprismas (70).

7. Senderoptik (60) nach einem der vorangehenden Ansprüche, sofern auf Anspruch 2 rückbezogen,
bei welcher bei mehreren Rhomboidprismen (70) eine Lichteintrittsfläche (72) eines in Bezug auf die Richtung des Strahlengangs des Primärlichts (57) unmittelbar nachfolgenden Rhomboidprismas (70) zur optischen Kopplung verbunden ist mit einer in Bezug auf die Richtung des Strahlengangs des Primärlichts (50) zweiten Lichtaustritts- und/oder Strahlteilungsfläche (74) eines in Bezug auf die Richtung des Strahlengangs des Primärlichts (57) unmittelbar vorangehenden Rhomboidprismas (70).

8. Senderoptik (60) nach einem der vorangehenden Ansprüche,

- bei welcher der Strahlteiler eingerichtet ist, die Austrittsstrahlen (57-3) des Primärlichts (57) beim Durchlaufen der Prismenanordnung (69) mit Austritt mit einer gleichen oder im Wesentlichen gleichen Lichtintensität auszubilden,
- insbesondere indem beim Vorliegen einer Anzahl n von Rhomboidprismen (70)

  - das in Richtung des Strahlengangs des Primärlichts (57) j-te Rhomboidprisma (70) an seiner in Bezug auf die Richtung des Strahlengangs des Primärlichts (57) zweiten Lichtaustritts- und/oder Strahlteilungsfläche (74) ein Reflexionsvermögen $R_j$ und ein Transmissionsvermögen $T_j$ aufweist mit:

$$R_j = \frac{1}{n-j+1} \qquad \text{und} \qquad T_j = \frac{n-j}{n-j+1} \qquad (1, 2)$$

und/oder
- beim Vorliegen eines Keilprismas (80) die in Bezug auf die Richtung des Strahlengangs des Primärlichts (57) erste Lichtaustritts- und/oder Strahlteilungsfläche (72) des in Richtung des Strahlengangs des Primärlichts (57) ersten Rhomboidprismas (70) ein Reflexionsvermögen $R_0$ und ein Transmissionsvermögen $T_0$ aufweist mit:

$$R_0 = \frac{n}{n+1} \qquad \text{und} \qquad T = \frac{1}{n+1} \; . \qquad (3, 4)$$

9. LiDAR-System (1) zur optischen Erfassung eines Sichtfeldes (50), insbesondere für eine Arbeitsvorrichtung oder ein Fahrzeug,
mit einer Senderoptik (60) nach einem der vorangehenden Ansprüche.

10. Arbeitsvorrichtung und insbesondere Fahrzeug,
mit einem LiDAR-System (1) nach Anspruch 9 zur optischen Erfassung eines Sichtfeldes (50).

Fig. 1A

**Fig. 1B**

70

57, 57-2

74

57, 57-2

71

78

57, 57-2

57, 57-1

70'

57, 57-3

73

76

75

72

77

57, 57-3

**Fig. 1C**

80

57, 57-2

57, 57-2

57, 57-2

81

80'

86

85

57, 57-3

82  87  88  83

EP 3 379 294 A1

Fig. 3

Fig. 2

Fig. 4

**Fig. 5**

**Fig. 6**

EP 3 379 294 A1

Fig. 7

**Fig. 8**

**Fig. 9**

EP 3 379 294 A1

# Fig. 10

Europäisches
Patentamt

European
Patent Office

Office européen
des brevets

# EUROPÄISCHER RECHERCHENBERICHT

Nummer der Anmeldung

EP 18 16 2548

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 000978 A1 (SICK AG [DE]) 30. August 2012 (2012-08-30) * Absätze [0001] - [0027], [0035] - [0053] * * Abbildungen 1-7 * ----- | 1-10 | INV. G01S17/93 G01S7/481 |
| A | EP 1 265 081 A2 (AGILENT TECHNOLOGIES INC [US]) 11. Dezember 2002 (2002-12-11) * Absätze [0003] - [0007], [0027] - [0049] * * Abbildungen 1, 2 * ----- | 1-10 | |
| A | DE 42 29 313 A1 (BETR FORSCH INST ANGEW FORSCH [DE]) 3. März 1994 (1994-03-03) * Spalte 2, Zeile 15 - Spalte 3, Zeile 5 * * Abbildungen 1, 2 * ----- | 1-10 | |
| A | CN 101 319 873 A (SHANGHAI INST OPTICS & FINE ME [CN]) 10. Dezember 2008 (2008-12-10) * Abbildungen 1,2 * ----- | 1-10 | RECHERCHIERTE SACHGEBIETE (IPC) G01S G02B G01B |

Der vorliegende Recherchenbericht wurde für alle Patentansprüche erstellt

| Recherchenort | Abschlußdatum der Recherche | Prüfer |
|---|---|---|
| München | 3. August 2018 | Kruck, Peter |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 18 16 2548

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2018

| Im Recherchenbericht angeführtes Patentdokument | Datum der Veröffentlichung | Mitglied(er) der Patentfamilie | Datum der Veröffentlichung |
|---|---|---|---|
| DE 102011000978 A1 | 30-08-2012 | KEINE | |
| EP 1265081 A2 | 11-12-2002 | EP 1265081 A2 | 11-12-2002 |
| | | EP 1619525 A1 | 25-01-2006 |
| | | EP 1621848 A1 | 01-02-2006 |
| | | JP 4320385 B2 | 26-08-2009 |
| | | JP 4870630 B2 | 08-02-2012 |
| | | JP 2003075615 A | 12-03-2003 |
| | | JP 2007316669 A | 06-12-2007 |
| | | TW 578012 B | 01-03-2004 |
| | | US 2002191191 A1 | 19-12-2002 |
| DE 4229313 A1 | 03-03-1994 | AT 173814 T | 15-12-1998 |
| | | DE 4229313 A1 | 03-03-1994 |
| | | EP 0585893 A1 | 09-03-1994 |
| | | FI 933818 A | 03-03-1994 |
| | | JP 4130236 B2 | 06-08-2008 |
| | | JP H06213658 A | 05-08-1994 |
| CN 101319873 A | 10-12-2008 | KEINE | |

EPO FORM P0461

Für nähere Einzelheiten zu diesem Anhang : siehe Amtsblatt des Europäischen Patentamts, Nr.12/82